(19) Europäisches Patentamt
European Patent Office
Office européen des brevets

(11) **EP 1 839 504 B2**

(12) **NEW EUROPEAN PATENT SPECIFICATION**
After opposition procedure

(45) Date of publication and mention
of the opposition decision:
**18.02.2015 Bulletin 2015/08**

(45) Mention of the grant of the patent:
**11.03.2009 Bulletin 2009/11**

(21) Application number: **06006296.5**

(22) Date of filing: **27.03.2006**

(51) Int Cl.:
*A23L 2/66* (2006.01)     *A23J 1/20* (2006.01)
*A23L 1/40* (2006.01)     *A23C 21/00* (2006.01)

(54) **In situ preperation of whey protein micelles**

Im Produkt generierte Molkenprotein-Micellen

Préparation in situ de micelles de protéines de petit lait

(84) Designated Contracting States:
**AT BE BG CH CY CZ DE DK EE ES FI FR GB GR HU IE IS IT LI LT LU LV MC NL PL PT RO SE SI SK TR**

(43) Date of publication of application:
**03.10.2007 Bulletin 2007/40**

(73) Proprietor: **Nestec S.A.**
**1800 Vevey (CH)**

(72) Inventors:
• **Schmitt, Christophe J.E.**
**1092 Belmont s/Lausanne (CH)**
• **Bovetto, Lionel**
**74500 Larringes (FR)**

(74) Representative: **Rupp, Christian**
**Mitscherlich PartmbB**
**Patent- und Rechtsanwälte**
**Sonnenstraße 33**
**80331 München (DE)**

(56) References cited:
GB-A- 2 063 273      GB-A- 2 063 273
US-A- 4 107 334      US-A- 4 110 476
US-A- 4 309 417      US-A- 5 882 705
US-A- 6 036 984      US-A1- 2002 039 617

• DE LA FUENTE M A ET AL: "Recent advances in the characterisation of heat-induced aggregates and intermediates of whey proteins" TRENDS IN FOOD SCIENCE AND TECHNOLOGY, ELSEVIER SCIENCE PUBLISHERS, GB, vol. 13, no. 8, August 2002 (2002-08), pages 262-274, XP004395896 ISSN: 0924-2244
• HAQUE Z.: 'Influence of cation sequestering and pH on quiescent thermal association of b-lactoglobulin AB from fresh cheddar whey: an insight in gelation mechanism' FOOD SCI. TECHNOL.RES. vol. 8, no. 4, 2002, pages 311 - 316

Remarks:
The file contains technical information submitted after the application was filed and not included in this specification

EP 1 839 504 B2

## Description

### Field of the invention

The present invention relates to whey protein micelles, particularly to a method according to claim 1 for forming them in situ.

### Background

Protein constitutes an indispensable part of the diets of many people. It is not only used for its nutritional value but also imparts desirable texture and stabilisation to foods. For instance, in fat-containing products, the fat must remain stabilized over the entire shelf life of the product, so that no phase separation occurs.

To this end, emulsifying agents are utilized, that provide a stabilization of the emulsion once formed, based on their inherent property of a lipophilic or hydrophobic part being soluble in the non-aqueous phase and a polar or hydrophilic part being soluble in water such that said molecules facilitate emulsifying one phase in the other phase. Additionally, the emulsifying agents also protect the once formed droplets from aggregation and coalescence. As emulsifying agents naturally occurring substances are used, such as hydrocolloids, phospholipids (lecithin) or glycolipids and on the other hand synthetic agents like stearyl-2-lactylate or mono-, diacylglycerides, etc. may also be used.

One of the major drawbacks of the agents resides in that they sometimes substantially add to the costs of the final product, and do not add to the nutritional value of the product. Sometimes, such kinds of materials also do not show adequate stabilising properties because of an interfacial competition with proteins.

Increasingly, therefore, protein is also being used as an emulsifier and as a partial substitute for fat.

US 6767575 B1 discloses a preparation of an aggregate whey protein product, whereby whey protein is denatured by acidification and heating. The protein aggregates thus obtained are used in food application.

GB 1079604 describes improvements in the manufacture of cheese, whereby whey proteins undergo heat treatment at an optimum pH value, in order to obtain insoluble whey proteins which are then added to raw milk.

WO 93/07761 is concerned with the provision of a dry microparticulated protein product which can be used as a fat substitute.

US 5750183 discloses a process for producing proteinaceous microparticles which are useful as fat substitute containing no fat.

A proteinaceous fat substitute is also disclosed in WO 91/17665 whereby the proteins are in the form of a water-dispersible microparticulated denatured whey protein.

Apart from the food applications, proteins are also present in many pharmaceutical and cosmetic compositions.

One of the problems encountered with the production of products containing globular proteins in general, and whey protein in particular, however is their limited processability. Indeed, protein molecules when heated, or when subjected to acidic or alkaline environment or in the presence of salts tend to lose their native structure and reassemble in various random structures such as gels, for example.

The preparation of gelled aqueous compositions of whey proteins is the subject of EP 1281322.

Elofsson et al. in International Dairy Journal, 1997, p.601-608 describe cold gelling of whey protein concentrates.

Similarly, Kilara et al. in Journal of Agriculture and Food 20 Chemistry, 1998, p.1830-1835 describes the effect of pH on the aggregation of whey proteins and their gelation.

This gel effect presents limitation in terms of not only processability (e.g. clogging of machines used in the manufacture of protein-containing products) but also in terms of the texture thus obtained, which may not be desirable for the wide range of protein applications.

Controlled denaturation of proteins is thus desirable in order to widen the use of proteins.

Erdman in Journal of American College of Nutrition, 1990, p.398-409 describes that the quality of microparticulated protein is not affected despite using high shear and heat.

EP 0603981 also describes a heat stable oil-in-water emulsion containing proteins.

US 4,309,417 describes protein-fortified isotonic beverages comprising whey protein as a preferred source of protein.

A complete, nutritionally balanced beverage or food composition comprising high nutritional quality protein such as whey protein and wherein the protein component provides 16-30% of the caloric amount is described in US 6,036,984.

US 4,110,476 is concerned with the preparation of stable liquid and frozen yogurts comprising undenatured whey protein concentrate.

US 2002/0039617 relates to the formation of insoluble protein particles based on whey protein which can be added to food or instant beverages and have organoleptic properties similar to that of high calorie fats and oils.

WO 2006/034857 A2 forming state of the art according to Art. 54 (3) EPC discloses a method for producing whey proteins in nanoparticulated form and to the nanoparticulated whey proteins thus obtained.

WO 2006/034857 A2 pertains to the use of these nanoparticulated whey proteins as emulsifiers, fat substitute, micellar casein substitute, whitening, foaming, texturising and/or filling agents.

Thus, an object of the invention is to improve the usability and applicability of proteins in heating processes.

## Summary of the invention

Accordingly, this object is achieved by means of the features of the independent claims. The dependent claim develop further the central idea of the present invention.

To achieve this object, a method is provided according to claim 1 for preparing a hot beverage or liquid comestible, the method comprising the following steps of providing a beverage or liquid comestible package comprising native whey protein and heating said package in order to prepare a heated ready-to-eat beverage or liquid comestible and at the same time transforming the native whey protein at least partially into whey protein micelles, wherein the yield of conversion of native whey protein into micelles is at least 20%.

## Figures

The present invention is further described hereinafter with reference to some preferred embodiments shown in the accompanying figures in which:

Fig. 1      shows the result of an experiment demonstrating the effect of pH and heat treatment on the micellisation of β-lactoglobulin.

Fig. 2      is showing a mean to determine the pH of micellisation for a commercial preparation (Bipro®, Batch JE032-1-420) using turbidity measurements at 500 nm.

Fig. 3      is a Transmission Electron Microscopy micrograph from whey protein micelles (2 wt.%, WPI 95, Lactalis) at pH 7.4. Scale bar is 200 nm.

Fig. 4      shows the result of an experiment evaluating the impact of the ionic strength (Arginine HCl) on the formation of protein micelles at constant pH of 7.0.

Fig. 5      shows the volume stability (FVS) of foam stabilized by 1 wt.% β-lactoglobulin micelles (Davisco) at pH 7.0 in presence of 60 mM Arginine HC1 compared to non-micellised β-lactoglobulin.

Fig. 6      shows the intensity-based equivalent hydrodynamic diameter of whey protein obtained by heat-treatment of a 1wt% β-lactoglobulin dispersion for 15 min at 85°C at pH ranging from 2 to 8. Whey protein micelles are obtained at pH 4.25 (positively charged with a zeta potential around +25mV) and at pH 6.0 (negatively charged with a zeta potential around -30mV). Z-averaged hydrodynamic diameter of the micelles was 229.3 nm at pH 4.25 and 227.2 nm at pH 6.0. The corresponding micrographs of the micelles obtained by TEM after negative staining are shown. Scale bars are 1 μm.

Fig. 7      shows a highly schematic structure of a whey protein micelle.

Fig. 8      shows a SEM (Scanning electron microscopy) micrograph of a whey protein micelle powder obtained after spray drying of a 20% protein content dispersion after microfiltration.

Fig. 9      is a negative staining TEM micrograph of a whey protein micelles dispersion obtained at 4% protein content.

Fig. 10      is a negative staining TEM micrograph of a whey protein micelle dispersion obtained at 20% protein content after microfiltration.

Fig. 11      shows the heat stability of a whey protein micelle dispersion obtained at 10% protein content after microfiltration at pH 7.0 in presence of NaCl after heating at 85°C for 15 min.

Fig. 12      shows the heat stability of a whey protein dispersion obtained at 4% protein content at pH 7.0 in presence of NaCl after heating at 85°C for 15 min.

Fig. 13      is a negative staining TEM micrograph from a 4% whey protein micelles dispersion based on a pure whey protein micelle spray dried powder after dispersion at 50°C in deionised water.

Fig. 14 is a graph showing the size distribution of micelles obtained by the process of the invention using a 4% Prolacta 90 whey protein isolate treated at pH 5.9.

Fig. 15 is a SEM micrograph showing the internal structure after cutting of a spray-dried powder granule that is presented on figure 8.

Fig. 16 is a negative staining TEM micrograph of a 4% whey protein micelles dispersion based on a pure freeze dried whey protein micelle powder after at room temperature in deionised water. Scale bar is 0.5 micrometre.

## Detailed description of the invention

According to the present invention, a method for preparing a hot beverage or liquid comestible according to claim 1 is provided, whereby the native whey proteins present in a package prior to heating are transformed at least partially into whey protein micelles, wherein the yield of conversion of native whey protein into micelles is at least 20%.

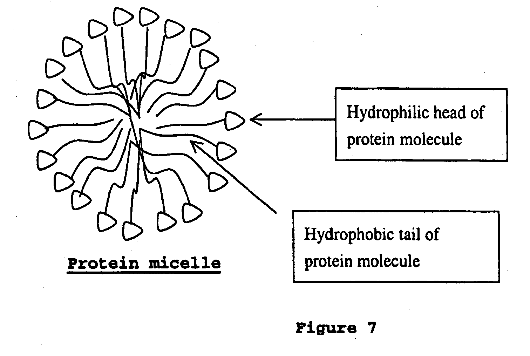

Figure 7 is a schematic representation of the micelles obtained by the method of the present invention, wherein the whey proteins are arranged in such a way that the hydrophilic parts of the proteins are oriented towards the outer part of the agglomerate and the hydrophobic parts of the proteins are oriented towards the inner "core" of the micelle. This energetically favourable configuration offers good stability to these structures in a hydrophilic environment.

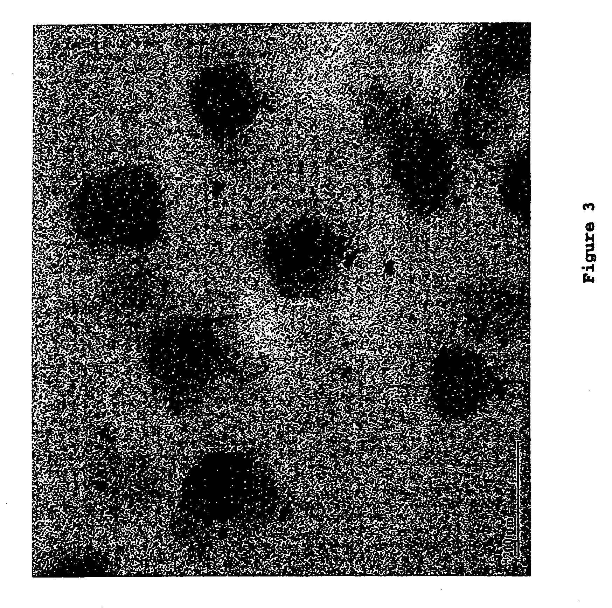

The specific micelle structure can be seen from the figures, in particular figures 3, 9, 10, 13 and 15, wherein the micelles consist essentially of spherical agglomerates of denatured whey protein.

Due to their dual character (hydrophilic and hydrophobic), this denatured state of the protein seems to allow interaction with a hydrophobic phase, e.g. a fat droplet or air, and a hydrophilic phase. The whey protein micelles therefore have perfect emulsifying and foaming properties.

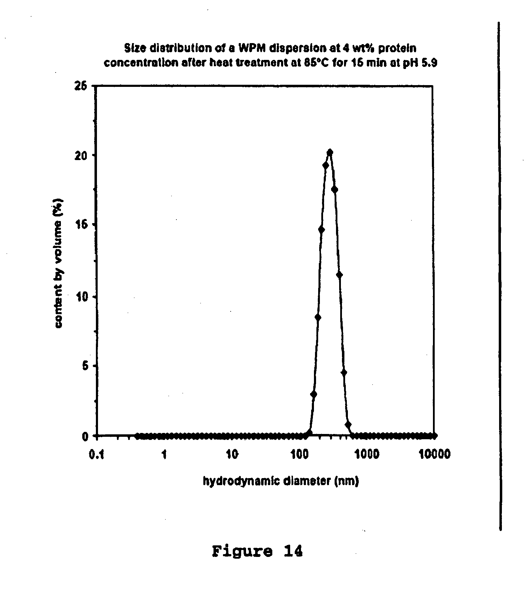

Furthermore, the micelles produced by the method of the present invention have an extremely sharp size distribution (see Fig. 14), such that more than 80% of the micelles produced will have a size smaller than 1 micron, preferably between 100nm and 900nm, more preferably between 100-770nm, most preferably between 200 and 400nm.

The mean diameter of the micelles can be determined using Transmission Electron Microscopy (TEM). In order to do so, the liquid micelle samples are encapsulated in agar gel tubes. Fixation is achieved by immersion in a solution of 2.5% glutaraldehyde in 0.1M, pH 7.4 cacodylate buffer and post-fixation with 2% Osmium tetroxide in the same buffer, both solutions containing 0.04% Ruthenium red. After dehydration in a graded ethanol series (70, 80, 90, 96, 100% ethanol), the samples are embedded in Spurr resin (Spurr/ethanol 1:1, 2:1, 100%). After polymerization of the resin (70°C, 48 hours), semi-thin and ultra-thin sections are cut with a Leica ultracut UCT ultra-microtome. Ultra-thin sections, stained with aqueous uranyl-acetate and lead citrate, are then examined by transmission electron microscopy (Philips CM12, 80 kV).

Without wishing to be bound by theory, it is thought that during micelle formation according to the process of the invention, the micelle reach a "maximum" size, due to the overall electrostatic charge of the micelle repelling any additional protein molecule, such that the micelle cannot grow in size any longer. This accounts for the narrow size distribution observed (cf. Fig. 14).

The micelles described above may be formed in situ according to the present invention and are present in the food or drink composition obtainable by the method of the present invention, wherein at least 20% of the whey protein is whey protein micelles.

The first step in the method of the present invention is to provide a beverage or liquid comestible package comprising native whey protein.

As the whey protein to be used in the present method, any commercially available whey protein isolates or concentrates may be used, i.e. whey protein obtained by any process for the preparation of whey protein known in the art, as well as whey protein fractions prepared therefrom or proteins such as β-lactoglobulin (BLG), α-lactalbumin and serum albumin. In particular, sweet whey obtained as a by-product in cheese manufacture, acid whey obtained as by-product in acid casein manufacture, native whey obtained by milk microfiltration or rennet whey obtained as by-product in rennet casein manufacture may be used as the whey protein. The whey protein may be from a single source or from mixtures of any sources.

The present invention is not restricted to whey isolates from bovine origin, but pertains to whey isolates from all mammalian animal species, such as from sheep, goats, horses, and camels. Also, the process according to the present invention applies to mineralised, demineralised or slightly mineralised whey preparations. By "slightly mineralized" is meant any whey preparation after elimination of free minerals which are dialyzable or diafiltrable, but which maintains minerals associated to it by natural mineralisation after preparation of the whey protein concentrate or isolate, for example. These "slightly mineralised" whey preparations have had no specific mineral enrichment.

Whey proteins are an excellent source of essential amino acids (AA) (45%). Compared to casein (containing 0.3g cysteine/100g protein), sweet whey proteins contain 7 times more cysteine, and acid whey 10 times more cysteine. Cysteine is the rate limiting amino acid for glutathione (GSH) synthesis, a tripeptide made of glutamate cysteine and glycine which has primary important functions in the defence of the body in case of stress. Requirements in these amino acids may be increased in case of stress and in elderly people. Also, glutathione oral supplementation with whey protein has been shown to increase plasma GSH levels of HIV-infected patients (Eur. J. Clin. Invest. 2001; 31, 171-178).

Other health benefits provided by whey proteins include enhancement of muscle development and building, as well as muscle maintenance in children, adults or elderly people, enhancement of the immune function, improvement of cognitive function, control of blood glucose such that they are suitable for diabetics, weight management and satiety, anti-inflammatory effects, wound healing and skin repair, lowering of the blood pressure, etc.

Whey proteins have a better protein efficiency ratio (PER = 118) compared for example to casein (PER = 100). PER is a measure of a protein quality assessed by determining how well such protein supports weight gain. It can be calculated by the following formula:

$$\mathtt{PER\ =\ body\ weight\ growth\ (g)\ /\ protein\ weight\ intake\ (g).}$$

| Examples: | PER | % Casein |
|---|---|---|
| casein | 3.2 | 100 |
| Egg | 3.8 | 118 |
| Whey | 3.8 | 118 |
| Whole Soya | 2.5 | 78 |
| Wheat gluten | 0.3 | 9 |

For the process of the invention, native whey proteins are provided in a package. The contents of the package may be in the form of dry ingredients to be diluted or in a liquid form.

When provided in the form of dry ingredients, the content of the package is preferably an essentially dry powder. Said powder comprises native whey protein in an amount of at least 4%, preferably no more than 6%. Additionally, the powder may comprise further food ingredients in powder form, such as dehydrated culinary, salts, dry soluble coffee granules, tea extracts, plant extracts, sugars etc.

Prior to heating, the dry package contents are diluted such that when in solution the whey proteins are present in an amount of 0.1 wt.% to 12 wt.%, preferably in an amount of 0.1 wt.% to 8 wt.%, more preferably in an amount of 0.2 wt.% to 7 wt.%, even more preferably in an amount of 0.5 wt.% to 6 wt.%, most preferably in an amount of 1 wt.% to 4 wt.% on the basis of the total weight of the solution.

The powder is preferably diluted with water.

When the contents of the package are provided in a liquid form, the liquid comprises native whey protein in an amount of 0.1 wt.% to 12 wt.%, preferably in an amount of 0.1 wt.% to 8 wt.%, more preferably in an amount of 0.2 wt.% to 7 wt.%, even more preferably in an amount of 0.5 wt.% to 6 wt.%, most preferably in an amount of 1 wt.% to 4 wt.% on the basis of the total weight of the solution.

The aqueous solution of the whey protein preparation as present before the heating step may also comprise additional compounds, which may stem from the powder ingredients or from the solution itself. Such additional compounds are for example by-products of the respective whey production processes, other proteins, gums or carbohydrates.

The package may comprise other food ingredients such as soup ingredients, sauce ingredients, cocoa ingredients, tea ingredients, plant extracts, sweet dessert ingredients, fats, salts, emulsifiers, sugars, maltodextrins, polysaccharides such as acacia gum or carrageenan, cereals, soluble fibres etc. It may comprise aromas such as vanilla, caramel, fruit, chocolate, coffee, cinnamon aroma etc. It may also comprise further functional ingredients such as sweeteners, caffeine, vitamins, minerals, drugs, ligands, bioactive agents, etc.

The whey protein, as well as the fractions and/or the main proteins thereof may be used in purified form or likewise in form of a crude product. According to a preferred embodiment, the content of divalent cations in the whey protein for the preparation of the beverage or liquid comestible may be less than 2.5%, more preferably less than 2%, even more preferably less than 0.2%. Most preferably the whey proteins are completely demineralised.

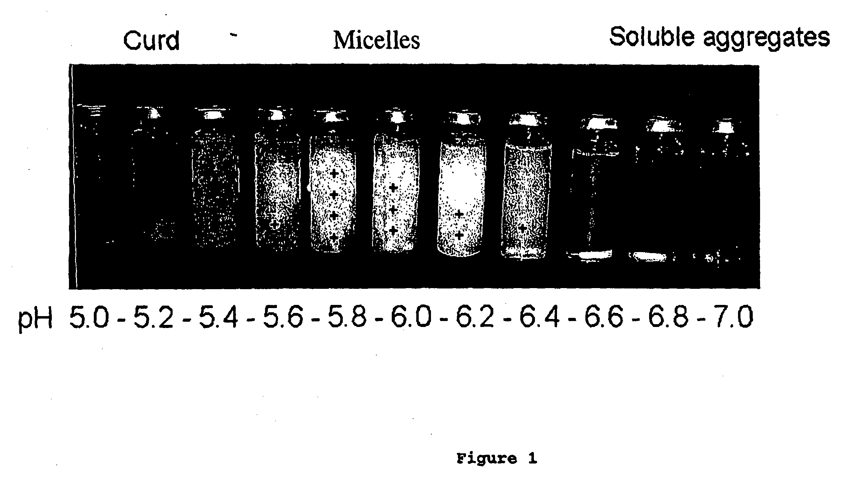

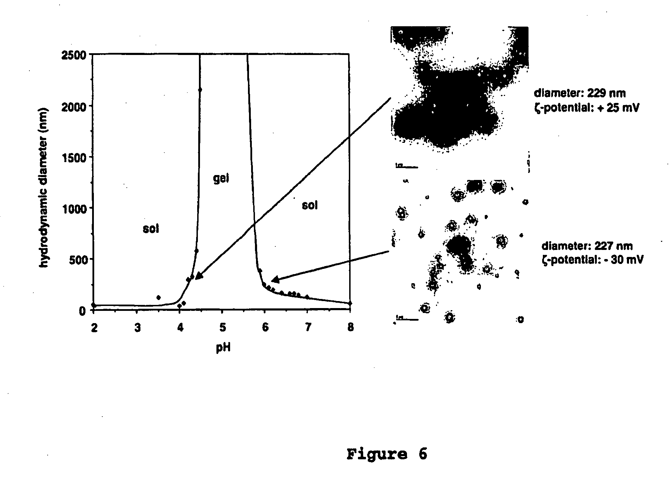

According to the present finding, the pH and the ionic strength of the aqueous native whey protein solution are important factors in the present method. Thus, for extensively dialyzed samples of native whey proteins which are virtually devoid or depleted of free cations such as Ca, K, Na, Mg, it has been found that when performing the heat treatment during a time period of 10s to up to 2 hours at a pH below 5.4, curd is obtained, while at a pH exceeding 6.8, soluble whey protein results (see Figure 1). Thus, only in this rather narrow pH window will whey proteins micelles having a diameter of less than 1$\mu$m be obtained. These micelles will have an overall negative charge. The same micelle form can also be obtained symmetrically below the isoelectrical pH, i.e from 3.5 to 5.0, more preferably 3.8 to 4.5, resulting in micelles being positively charged (see Figure 6).

The micelles obtained by the method of the present invention preferably have an overall negative charge. Thus the pH of the aqueous solution prior to heating is a range of from 5 to 9.

More specifically, to obtain negatively charged micelles, the pH may be in the range of from 5.6 to 6.4, more preferably from 5.8 to 6.0 for a low divalent cation content (e.g. less than 0.2% of the initial whey protein powder). The pH is increased up to 8.4 depending on the mineral content of whey protein source (concentrate or isolate). In particular, the pH may be between 7.5 to 8.4, preferably 7.6 to 8.0 to obtain negatively charged micelles in the presence of large amounts of free minerals and the pH may be between 6.4 to 7.4, preferably 6.6 to 7.2 to obtain negatively charged micelles in the presence of moderate amounts of free minerals. As a general rule, the higher the calcium and/or magnesium content of the initial whey protein powder, the higher the pH of micellisation.

In order to standardize the conditions of formation of the whey protein micelles, it is most preferable to demineralise by any of the known demineralisation techniques (dialysis, ultrafiltration, reverse osmosis, ion exchange chromatography...), any source of liquid native whey proteins with a protein concentration ranging from that of sweet whey, microfiltration permeate of milk or acid whey (0.9% protein content) to that of a concentrate at 30% protein content. The dialysis can be done against water (distilled, deionised or soft), but as this will only allow removal of the ions weakly bound to the whey proteins, it is more preferable to dialyse against an acid at pH below 4.0 (organic or inorganic) to better control the ionic composition of the whey proteins. By doing so, the pH of whey protein micelle formation is below pH 7.0, more preferably comprised between 5.8 to 6.6.

When the contents of the package are in liquid form, the pH is generally adjusted by the addition of acid, which is preferably food grade, such as e.g. hydrochloric acid, phosphoric acid, acetic acid, citric acid, gluconic acid or lactic acid. If the mineral content is high, the pH is generally adjusted by the addition of alkaline solution, which is preferably food grade, such as sodium hydroxide, potassium hydroxide or ammonium hydroxide. In any case, the pH of the liquid is between 5 and 9, preferably between 5 and 8.

When the contents of the package are in a dry form, the dry ingredients are selected such that when diluted with water, the pH of the solution prior to heating is between 5 and 9, preferably between 5 and 8.

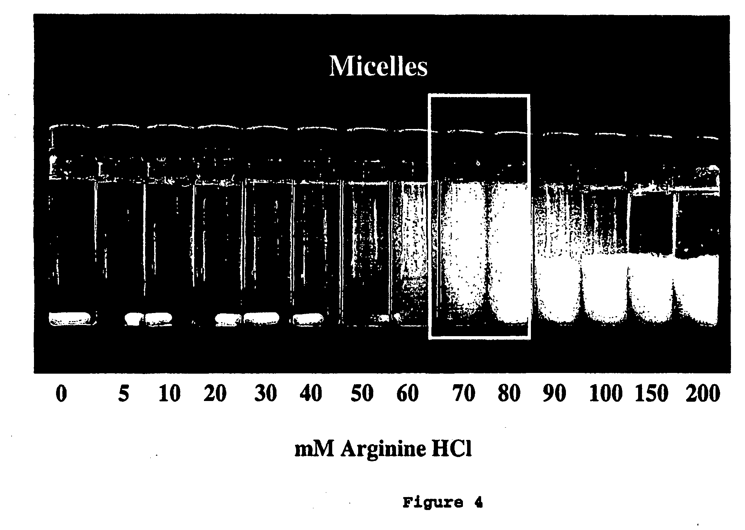

Alternatively, if no pH adjustment step is desired, it is possible to adjust the ionic strength of the whey protein preparation while keeping the pH constant. Then, ionic strength may be adjusted by organic or inorganic ions in such a way that allows micellisation at a constant pH value of 7. Figure 4 shows that micelles may be formed at a constant pH value of 7.0 while the ionic strength is varied by the addition of 70-80 mM of arginine HCl.

A buffer may be further added to the aqueous solution of whey protein or to the dry powder so as to avoid a substantial change of the pH value during heat treatment of the whey protein. In principle, the buffer may be selected from any food-grade buffer system, i.e. acetic acid and its salts, such as e.g. sodium acetate or potassium acetate, phosphoric acid and salts thereof, e.g. $NaH_2PO_4$, $Na_2HPO_4$, $KH_2PO_4$, $K_2HPO_4$, or citric acid and salts thereof etc.

Adjusting the pH and/or the ionic strength of the aqueous solution results in a controlled process yielding micelles having a size between 100nm-900nm, preferably between 100-700nm, most preferably between 200-400nm. Preferably, the distribution of micelles having dimensions between 100-700nm is greater than 80% when carrying out the process of the invention (see Figure 14).

In a second step of the process of the present invention, the preparation comprising native whey protein is then subjected to the heat treatment. When the package of the present invention is in the form of a powder, water is generally added prior to the heating step. In this respect it has been found that for obtaining whey protein micelles, it is important to have the temperature in the range of from about 80 to about 98 °C, preferably of from about 82 to about 89 °C, more preferably of from about 84 to about 87 °C, most preferred at about 85 °C.

Once the desired temperature has been reached, it is kept at this temperature for a minimum of 10 seconds and a maximum of 2 hours. Preferably, the time period during which the aqueous whey protein solution is kept at the desired temperature ranges from 12 to 25 minutes, more preferably from 12 to 20 minutes, or most preferably about 15 minutes.

The heat treatment may also be achieved in a microwave oven or any similar equipment allowing heating by microwaves with a time/quantity ratio of between 0.8s per mL and 1.2s per mL of solution. This will depend on the initial temperature of the solution prior to heating and to the power of the microwave oven. For instance, a 4 wt% protein solution heated in a 1500 W apparatus up to boiling temperature (98°C at an altitude of 833m) requires approximately 1s per mL of solution. A continuous process may also be used by addition of 8 or more magnetrons around a glass tube potentially prolonged by a holding tube to increase the time of incubation.

Heating the content of the package according to the present invention allows the preparation of a ready-to-eat beverage or liquid comestible while at the same time transforming the native whey protein at least partially into whey protein micelles, wherein the yield of conversion of native whey protein into micelles is at least 20%. Preferably, the solution is heated to a temperature between 80°C and 100°C.

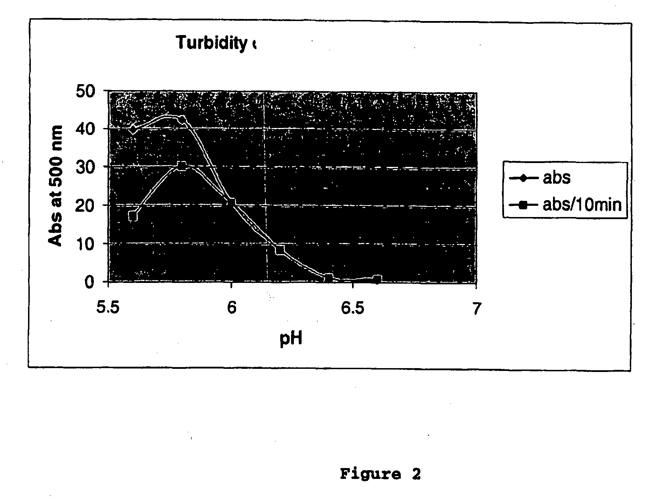

As shown in Figure 2, turbidity measurements are an indication of micelle formation. According to the present invention, the turbidity measured by absorbance at 500nm is at least 3 absorbance units for 1% protein solution but can reach 16 absorbance units when the yield of micellisation is above 80% (see Figure 2). As a result of the present invention, the heated solution will have a milky appearance due to the presence of whey protein micelles.

To further illustrate the effect of micelle formation from a physicochemical point of view, a 1 wt% dispersion of Bipro® has been heated for 15 minutes at 85°C at pH 6.0 and 6.8 in MilliQ water. The hydrodynamic diameter of the aggregates obtained after heat treatment was measured by dynamic light scattering. The apparent molecular weight of the aggregates was determined by static light scattering using the so-called Debye plot. The surface hydrophobicity was probed using the hydrophobic ANS probe and the free accessible thiol groups by the DTNB method using cystein as the standard amino acid. Finally, the morphology of the aggregates was studied by negative staining TEM. The results are presented in table 1.

**Table 1: Physicochemical properties of soluble whey protein aggregates obtained by heat treatment (85°C, 15 min) of a 1 wt% protein dispersion in presence or absence of NaCl.**

| pH | hydrodynamic diameter (nm) | molecular weight $M_w$ (x $10^6$ g.mol$^{-1}$) | morphology | $\zeta$-potential (mV) | protein surface hydrophobicity ($\mu$g.mmol$^{-1}$ ANS) | accessible SH groups (nmol SH.mg$^{-1}$ prot.) |
|---|---|---|---|---|---|---|
| 6.0 | 120.3±9.1 | 27.02±8.09 | Spherical micelles | -31.8±0.8 | 105.4 | 3.5±0.4 |
| 6.8 | 56.2±4.6 | 0.64±0.01 | linear aggregates | -27.9±1.2 | 200.8 | 6.8±0.5 |

From table 1, it is clear that the whey protein micelles that were formed at pH 6.0 allow protein to decrease its specific ANS surface hydrophobicity by a factor of 2 compared to non-micellised whey protein heated in the same condition, but at pH 6.8. The micelle formation can be also seen on the very high molecular weight of 27 x $10^6$ g.mol$^{-1}$ compared to 0.64 X $10^6$ g.mol$^{-1}$ for non-micellised protein, indicating a very condensed state of the matter within the micelle (low amount of water). Interestingly enough, the $\zeta$-potential of the micelles is even more negative than the non-micellised proteins even if the latter have been formed at a more basic pH than the micelles. This is the result of a more hydrophilic surface of the micelles being exposed to the solvent. Finally, one should note that the thiol reactivity of the micelles is much lower than that of the non-micellised protein because of the different pH of heat treatment.

It has been found that the conversion yield of native whey protein to micelles decreases when the initial protein concentration of native whey protein is high. For example, when starting with a whey protein isolate Prolacta 90 (lot 673 from Lactalis), the yield of formation of whey protein micelles drops from 85% (when starting with 4% proteins) to 50% (when starting with 12% of proteins). In order to maximize the formation of whey protein micelles (>85% of the initial protein content), it is better to start with an aqueous whey protein solution having a protein concentration below 12%, preferably below 4%. Depending on the intended final applications, the protein concentration is adjusted before heat treatment to manage the optimal whey protein micelles yield.

According to the present method, native whey protein are converted to whey protein micelles during the heating step. The yield of conversion of native whey protein into micelles is of at least 20%, preferably at least 50%, more preferably at least 80%, and the residual soluble aggregates or soluble protein content is preferably below 20%. The whey proteins micelles obtained according to the present method have an average diameter of less than 1 $\mu$m, preferably of from 100 to 900 nm, more preferably from 100 to 700 nm, most preferably from 200-400nm.

The average micelle size is characterised by a polydispersity index below 0.200. As a consequence, the white suspension obtained by the present invention is stable and has a milky appearance in a large range of pH 2-8. It has been observed that whey protein micelles could form aggregates around pH 4.5, with however no sign of macroscopic phase separation after at least 12 hours at 4°C.

The purity of whey protein micelles produced according to the method of the present invention can be obtained by determining the amount of residual soluble proteins. Micelles are eliminated by centrifugation at 20 °C and 26900 g for 15 min. The supernatant is used to determine the protein amount in quartz cuvettes at 280nm (1cm light pathlength). Values are expressed as a percentage of the initial value before heat treatment.

$$\text{Proportion of micelles} = (\text{Amount of initial proteins} - \text{amount of soluble proteins}) / \text{Amount of initial proteins}$$

An advantage of the method of the present invention is that the whey protein micelles prepared accordingly have not been submitted to any mechanical stress leading to reduction of the particle size during formation. This method induces spontaneous micellisation of whey proteins during heat treatment in the absence of shearing.

The whey protein micelles have shown to be ideally suited for use as a whitening agent, an emulsifier, a fat substitute, a substitute for micellar casein or a foaming agent, since they are able to stabilize fat and/or air in an aqueous system for prolonged period.

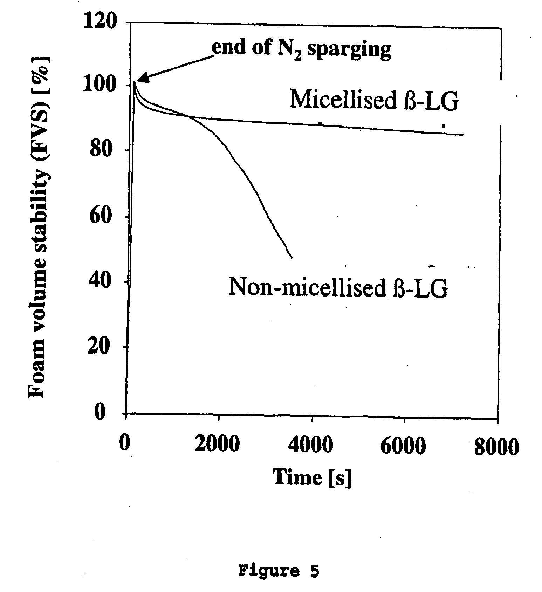

They have been shown to be stabilisers in milky foam matrices for instance. The foam stability is shown in Figure 5 which compares the use of non-micellised whey protein versus the micellised whey protein of the present invention.

Thus, whey protein micelles may be used as an emulsifying agent, for which the material is ideally suited, since it has a neutral taste and no off-flavour is created by the use of such material. They may also be used as micellar casein substitute.

In addition, the present whey protein micelles may serve as a whitening agent, so that with one compound several tasks may be fulfilled. Since whey is a material abundantly available, the use thereof reduces the cost of a product requiring an emulsifying, filling, whitening or foaming agent, while at the same time adding to its nutritional value. Indeed, the micelles obtained by the present invention have a Protein Efficiency Ratio of at least 100, preferably at least 110, which makes them important nutritional ingredients.

Due to their neutral taste, their whitening power and their stability after heat treatment, the present whey proteins micelles may be used to increase skimmed milk whiteness and mouthfeel.

As well as increasing the whitening power of dairy systems for the same total protein content, the fat content in a food matrix may be reduced. This feature represents a particular advantage of the present whey protein micelles, since it allows e.g. adding a milk creamer without adding additional fat derived from the milk as such.

Accordingly, the method of the present invention can be used for the preparation of any kind of ready-to-eat beverage or liquid comestible product requiring stabilisation of an emulsion or a foam, such as e.g. cappuccino instant beverages, coffee creamers, or also in low fat or essentially fat free dairy products, or also where whey protein micelles find application as a micellar casein substitute. By "liquid comestible" is meant any food product in a liquid or semi-liquid form which can be consumed by a human or an animal.

Thus, the package as used in the present invention comprises ingredients as defined in claim 1 selected from coffee, soup ingredients, sauce ingredients, cocoa ingredients, tea ingredients, plant extract ingredients, sweet dessert ingredients etc.

Examples for products, where the present whey protein micelles may find application are for example food products such as soups, dairy products, pasteurized UHT milk, sweet condensed milk, frappés, fermented milks, milk-based fermented products, milk chocolate, white chocolate, dark chocolate, hot chocolate, sauces, dessert products, cappuccino coffee, coffee creamer, foams, emulsions, fermented cereal based products, infant formula, pet food, liquid oral supplements etc.

In a further aspect of the invention, the ready-to-eat beverage or liquid comestible produced may be cooled prior to consumption. Alternatively, it may further be used as an ingredient in the manufacture of other consumables, such as dairy products, mayonnaise, salad dressing, pasteurized UHT milk, sweet condensed milk, yoghurt, fermented milks, milk-based fermented products, milk chocolate, white chocolate, dark chocolate, mousses, foams, emulsions, ice creams, fermented cereal based products, milk based powders, infant formula, diet fortifications, pet food, tablets, liquid bacterial suspensions, dried oral supplement, liquid oral supplement etc.

Indeed, due to their stability, the micelles produced during the heat treatment will conserve their characteristics and functions regardless of any cooling or further processing.

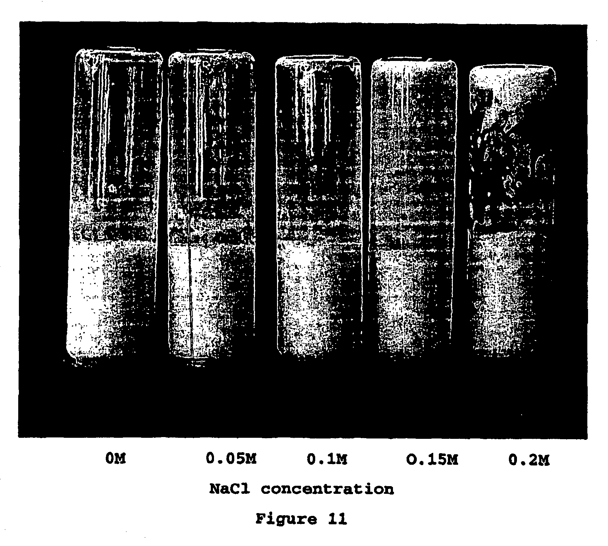

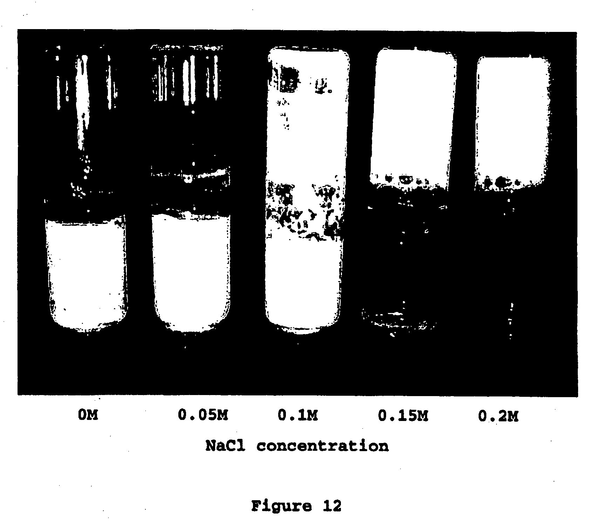

Figures 11 and 12 compare the heat stability of whey protein micelles with native whey protein, whereby the whey protein micelles are noticeably more resistant to heating.

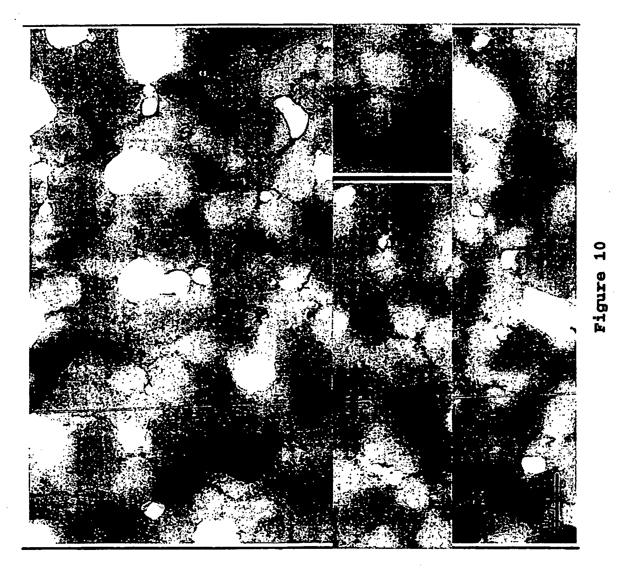

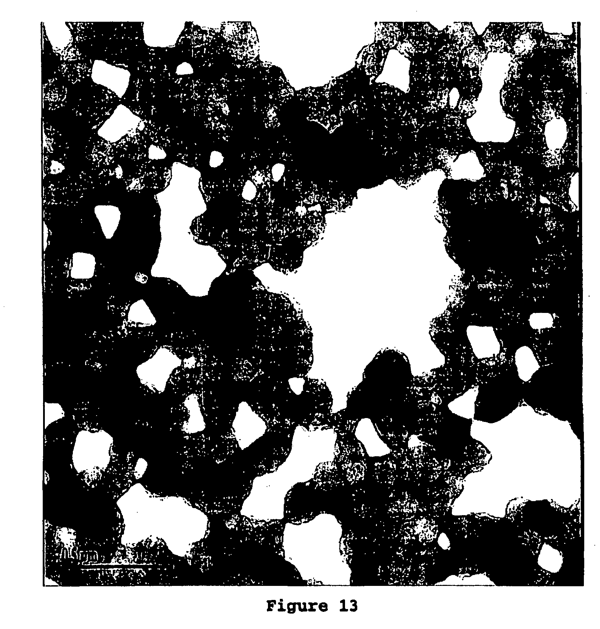

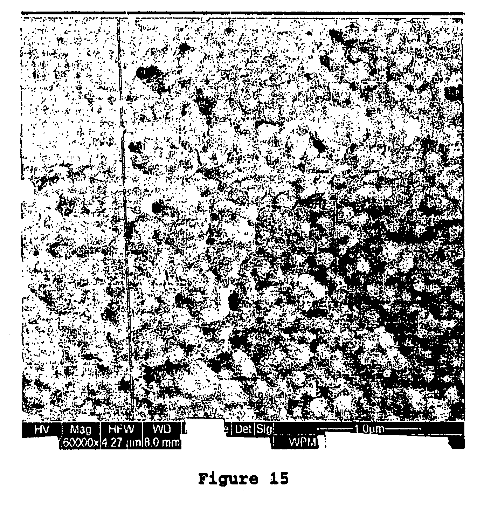

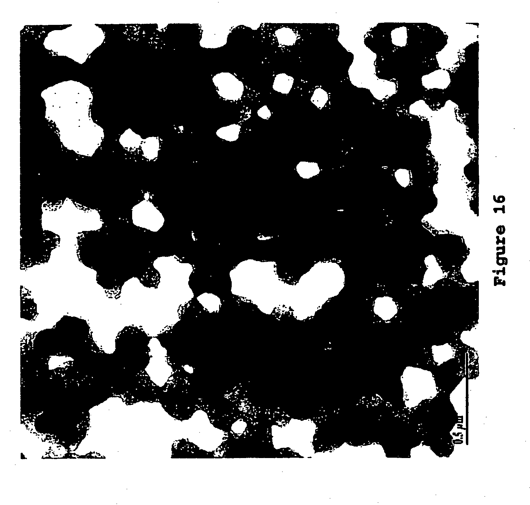

Furthermore, it has been shown that the basic micelle structure of the whey proteins is conserved, despite further processing such as concentration, spray-drying, freeze-drying, roller drying etc. Indeed powders obtained from whey protein micelle concentrate can be easily redispersed in water at room temperature or at 50°C. The size and structure of the whey protein micelles are fully conserved compared to the initial concentrate. For example, in Figure 13, a whey protein micelle concentrate that was spray-dried at 20% protein concentration has been redispersed in deionised water at 50°C at a protein concentration of 50%. The structure of the micelles has been probed by TEM and can be compared to Figure 10. A similar shape of micelles was obtained. The diameter of the micelles was found to be 315 nm by dynamic light scattering with a polydispersity index of 0.2. Figure 15 shows a whey protein powder grain which has been sectioned, and whereby the individual whey protein micelles are observable. In figure 16, the micelles are also observed upon redispersion of a freeze-dried whey protein micelle powder.

The following examples illustrate the present disclosure without limiting it thereto.

## Examples

The preparation of whey protein micelles is further illustrated by reference to the following examples describing in detail the preparation of the micelles. The examples described herein are not to be limited in scope by the specific embodiments herein disclosed, since these embodiments are intended as illustrations of several aspects of the invention.

### Comparative-Example 1: Micellisation of β-Lactoglobulin

β-Lactoglobulin (lot JE002-8-922, 13-12-2000) was obtained from Davisco (Le Sueur, MN, USA). The protein was purified from sweet whey by ultra-filtration and ion exchange chromatography. The composition of the powder is 89.7 % protein, 8.85 % moisture, 1.36% ash (0.079 % $Ca^{2+}$, 0.013 % $Mg^{2+}$, 0.097 % $K^+$, 0.576 % $Na^+$, 0.050 % $Cl^-$). All other reagents used were of analytical grade (Merck Darmstadt, Germany).

The protein solution was prepared at 0.2% concentration by solvation of β-lactoglobulin in MilliQ® water (Millipore), and stirring at 20 °C for 2 h. Then pH of aliquots was adjusted to 5.0, 5.2, 5.4, 5.6, 5.8, 6.0, 6.2, 6.4, 6.6, 6.8, 7.0 by HC1 addition. The solutions were filled in 20 ml glass vials (Agilent Technologies) and sealed with aluminum capsules containing a silicon/PTFE sealing. The solutions were heated at 85 °C for 15 min (time to reach the temperature 2.30 - 3.00 min). After the heat treatment, the samples were cooled in ice water to 20 °C.

The visual aspect of products (Figure 1) indicates that the optimal pH of micellisation is 5.8.

### Comparative-Example 2: Micellisation of whey protein isolate

Whey protein isolate (WPI) (Bipro®, Batch JE032-1-420) was obtained from Davisco (Le Sueur, MN, USA). The composition of the powder is reported in table 2.

The protein solution was prepared at 3.4% protein by solvation of whey protein powder in MilliQ® water (Millipore), and stirring at 20 °C for 2 h. The initial pH was 7.2. Then pH of aliquots was adjusted at 5.6, 5.8, 6.0, 6.2, 6.4 and 6.6 by HCl 0.1N addition.

The solutions were filled in 20 ml glass vials (Agilent Technologies) and sealed with aluminum capsules containing a silicon/PTFE sealing. The solutions were heated at 85 °C for 15 min (time to reach the temperature 2.30 - 2.50 min). After the heat treatment, samples were cooled in ice water to 20 °C.

The turbidity of heated whey proteins has been determined at 500 nm and 25°C, samples were diluted to allow the measurement in the range of 0.1-3 Abs unit (Spectrophotometer Uvikon 810, Kontron Instrument). Values were calculated for the initial protein concentration 3.4%.

The pH of micellisation was considered to be reached upon stability (less than 5% variation of the initial value) of the absorbance measured at 500 nm within an interval of 10 minutes for the same sample as illustrated by the figure 2. For this product the optimal pH for micellisation was 6.0 to 6.2. For this pH adjusted before heat treatment stable turbidity was 21 and residual soluble protein evaluated by absorbance at 280 nm after centrifugation was 1.9%. We can conclude that 45% of initial proteins were transformed in micelles at pH 6.0.

Table 2: Composition of WPI and sample characteristics after micellisation

| Supplier | Davisco |
|---|---|
| Product name | Bipro |
| Batch number | JE 032-1-420 |
| Composition (mg/100 g) | |
| Sodium | 650 |
| Potassium | 44 |
| Chloride*10 if ≤ 40 | 10 |
| Calcium | 82 |
| Phosphorus | 49 |

(continued)

| Magnesium | 6 |
|---|---|
| Initial pH | 7.2 |
| pH micellisation | 6.0 |
| Turbidity (500 nm)for 3.4% protein in solution | 21 |
| Residual Soluble protein (%) by absorbance at 280 nm | 1.9 |

**Comparative-Example 3: Microscopic observation of micelles**

Production of micelles:

Protein solution was prepared at 2% protein by solvation of whey protein powder (WPI 90 batch 989/2, Lactalis, Retier, France) in MilliQ® water (Millipore), and stirred at 20 °C for 2 h. Then pHs of aliquots were adjusted using HCl 0.1N or NaOH 0.1N.

The solutions were filled in 20 ml glass vials (Agilent Technologies) and sealed with aluminum capsules containing a silicon/PTFE sealing. The solutions were heated at 85°C for 15 min (time to reach the temperature 2.30-2.50 min). After the heat treatment, the samples were cooled in ice water to 20 °C. For this product the optimal pH for micellisation was 7.4.

Microscopic observations:

Liquid micelle samples were encapsulated in agar gel tubes. Fixation was achieved by immersion in a solution of 2.5% glutaraldehyde in 0.1M, pH 7.4 cacodylate buffer and post-fixation with 2% Osmium tetroxide in the same buffer, both solutions containing 0.04% Ruthenium red. After dehydration in a graded ethanol series (70, 80, 90, 96, 100% ethanol), the samples were embedded in Spurr resin (Spurr/ethanol 1:1, 2:1, 100%). After polymerization of the resin (70°C, 48 hours), semi-thin and ultra-thin sections were cut with a Leica ultracut UCT ultra-microtome. Ultra-thin sections, stained with aqueous uranyl-acetate and lead citrate, were examined in transmission electron microscopy (Philips CM12, 80 kV).

TEM micrograph is presented in figure 3. Obtained micelles are presenting a spherical shape with a diameter of 200 nm.

Particle size distribution

The intensity-based size distributions of micelles were measured for those micelles obtained by heat-treatment of a 1 wt % β-lactoglobulin dispersion for 15 min at 85°C at pH 4.25 (positively charged with a zeta potential around +25mV) and at pH 6.0 (negatively charged with a zeta potential around -30mV). Z-averaged hydrodynamic diaemeter of the micelles was 229.3 mm at pH 4.25 an 227.2 at pH 6.0. β-LG and whey protein aggregations were followed using dynamic light scattering. A Nanosizer ZS apparatus (Malvern Instruments, UK) equipped with a laser emitting at 633 nm and with 4.0 mW power was used. The instrument was used in the backscattering configuration, where detection is done at a scattering angle of 173°. This allows considerable reduction of the multiple scattering signals found in turbid samples. Samples were placed in a squared quartz cell (Hellma, pathlength 1 cm). The path length of the light beam was automatically set by the apparatus, depending on the sample turbidity (attenuation). The autocorrelation function was calculated from the fluctuation of the scattered intensity). The results are presented in figure 6. It shows that the average particle is characterized by a very narrow polydispersity index (<0.200). In consequence, the white suspension obtained by the present invention is stable and has a milky appearance in a large range of pH 3-8.

**Comparative-Example 4: Micellisation of a β-lactoglobulin at a constant pH**

The method described in example 1 was repeated with the proviso of using an aqueous solution of 2 % β-lactoglobulin. The pH of this solution has been adjusted to 7.0 after adding Arginine HCl solutions to obtain a final salt concentration ranging from 5 to 200 mM and a final β-lactoglobulin concentration of 1%. Subsequent heat treatment (80 °C, 10 min, about 2 min heating up) was carried out to produce micelles.

The results are shown in Fig. 4 and clearly indicate that only in the ionic strength range of from about 50 to 70 mM, a substantial turbidity can be observed, indicating the presence of whey protein micelles.

**Comparative-Example 5: Preparing a whitening agent**

Native whey proteins (WPI 95 batch 848, Lactalis; 8 wt-% aqueous solution) were treated according to example 2. The resulting product lightness (L) was measured in trans-reflectance mode using a MacBeth CE-XTH D65 10° SCE apparatus equipped with a 2 mm measuring cell. The resulting lightness was L = 74.8, that could be compared to the value of L = 74.5 for full-fat milk.

**Comparative-Example 6: Preparing an aqueous foam**

Native β-lactoglobulin (Biopure, Davisco, lot JE 002-8-922, 2 wt-% aqueous solution) was mixed with 120 mM Arginine HCl solution so that the final β-lactoglobulin concentration was 1 wt.% and Arginine HCl 60 mM. The pH was then adjusted to 7.0 by addition of 1N HCl. The mixture was then heat treated at 80°C for 10 minutes so that 90% of initial β-lactoglobulin was converted into micelles having a z-averaged diameter of 130 nm. In this case, the diameter of the micelles was determined using a Nanosizer ZS apparatus (Malvern Instruments, UK). The sample was poured in a quartz cuvette and variations of the scattered light were recorded automatically. The obtained autocorrelation function was fitted using the cumulants method so that the diffusion coefficient of the particles could be calculated and thereafter the z-averaged hydrodynamic diameter using the Stokes-Einstein law. For this measurement, the refractive index of the solvent was taken as 1.33 and that of the micelles 1.45. A volume of 50 mL of the resulting dispersion of β-lactoglobulin micelles is then foamed by nitrogen sparging through a glass frit generating bubbles of 12-16 $\mu$m to produce a foam volume of 180 cm$^3$ using the standardised Foamscan™ (ITConcept) apparatus. The volume stability of the foam was then followed with time at 26°C using image analysis and compared to the stability of the foam obtained with β-lactoglobulin treated in the same conditions, but without Arginine HCl, where no micelles were formed. Fig. 5 shows that the foam volume stability is greatly improved by the presence of β-lactoglobulin micelles.

**Comparative-Example 7: Whey based Fermented dairy product - fermentation trials**

Material

Whey protein isolate (WPI) (Bipro®) was obtained from Davisco (Le Sueur, MN, USA) (protein concentration 92.7%).
Spray dried whey permeate (Variolac 836): Lactose
concentration: 83 % -Minerals: 8%
Lactic Acid 50 %
Edible Lactose (Lactalis)
De-ionized water

Method

The Bipro® powder was dissolved in de-ionized water in order to have a protein concentration of 4.6 %, i.e. for 3 litres of solution 154.5 g of WPI powder and 2845.5 g of water. The hydration time was 3 hours. After hydration, this solution has been divided in samples of 200 ml to prepare the different trials:

Table 3

| Trial | Whey permeate (%) | Lactose (%) | pH adjustment | Heating 85°C / 15 min |
|---|---|---|---|---|
| 1 | 2.9 | 2.5 | 6.5 | + |
| 2 | 0 | 5 | 6 | + |
| 3 | 0 | 5 | 6.7 | - |
| 4 | 0 | 5 | 6.7 | + |
| 5 | 0 | 5 | 6.1 | + |
| 6 | 0 | 0 | 6 | + |
| 7 | 0 | 5 (added after pH adjustment) | 6 | - |
| 8 | 0 | 5 (added after pH adjustment) | 6 | + |

For each solution, lactic acid at 50 % has been added to adjust the pH before heating.
Samples were heated with the double boiler up to 85°C and maintain at this temperature during 15 minutes. After heating, solutions were cooled at 40°C and inoculated with Lactobacillus bulgaricus and Streptococcus thermophilus. Samples stayed 5h30 in a steam room at 41°C before to be placed in a cold room at 6°C.

The results are presented in Table 4.

Table 4

| Trial | Whey permeate | Lactose | pH | Heating | pH after 5h30 | Aspect |
|---|---|---|---|---|---|---|
| 1 | + | + | 6.5 | + | 4.68 | Very firm |
| 2 | - | + | 6 | + | 4.7 | Firm |
| 3 | - | + | 6.7 | - | 5.78 | Liquid |
| 4 | - | + | 6.7 | + | 4.81 | Very firm |
| 5 | - | + | 6.1 | + | 4.59 | Very firm |
| 6 | - | - | 6 | + | 4.99 | Very firm |
| 7 | - | - added after pH adjustment | 6 | - | 4.87 | Liquid with white speckles |
| 8 | - | - added after pH adjustment | 6 | + | 4.77 | Firm |

**Comparative-Example 8: Powdered whey protein micelles obtained by spray-drying**

Material

Whey protein isolate (WPI, Prolacta90® from Lactalis, Rétiers, France) with a protein content of 90%
Edible lactose
Maltodextrins DE39
De-ionised water
Edible hydrochloric acid 1M

Method

Using a double-jacketed 100 L tank, the Prolacta90® powder was dispersed at 50°C in de-ionized water at a protein concentration of 10 wt% under gentle stirring in order to avoid foam formation, i.e. 11 kg of Prolacta90® were dispersed in 89 kg of de-ionised water. After 1 hour of dispersion, the pH of the dispersion was adjusted to the micellisation pH (around 6.3 in that case) by addition of HCl. The temperature of the dispersion was raised to 85°C and maintained for 15 minutes in order to generate the whey protein micelles. After 15 minutes, the temperature was decreased to 50°C and the 10 wt% whey protein micelles dispersion was split in two batches of 50 kg. In a first trial, 20 kg of lactose were dispersed in 50 kg of micelles dispersion at 50°C and stirred for 30 min. Similarly, 20 kg of maltodextrins DE39 were added to the remaining 50 kg of whey protein micelles dispersion.

The two mixtures were then spray dried into a NIRO SD6.3N tower at a flow rate of 15 L/h. The air input temperature was 140°C and the air output temperature was 80°C. The water content of the obtained powders was lower than 5%.

The size of the whey protein micelles was determined in presence of lactose and maltodextrin (DE39) in water using dynamic light scattering before and after spray drying. The total protein concentration was set to 0.4 wt% by dilution of the dispersion before spray drying or reconstitution of the powder in order to be in the dilute regime of viscosity for whey protein micelles. A Nanosizer ZS apparatus (Malvern Instruments) was used and micelle diameter was averaged from 20 measurements.

The particle diameter determined for whey protein micelles in presence of lactose and maltodextrins (DE39) was 310.4 nm and 306.6, respectively. After reconstitution of the powders, the respective diameters were found to be 265.3 nm and 268.5, respectively. These measurements confirm than whey protein micelles were physically stable regarding spray drying. The results were corroborated by TEM microscopy observations of 0.1 wt% whey protein micelles dispersions in water using negative staining in presence of 1% phosphotungstic acid at pH 7. A Philips CM12 transmission electron microscope operating at 80 kV was used. Whey protein micelles were observed in solution before spray drying and after reconstitution of the spray-dried powder. No difference of morphology and structure could be detected.

**Comparative-Example 9: Concentration by evaporation**

A whey protein isolate Prolacta 90 from Lactalis (lot 500648) has been reconstituted at 15°C in soft water at a protein concentration of 4% to reach a final batch size of 2500 kg. The pH was adjusted by addition of 1M hydrochloric acid so that the final pH value was 5.90. The whey protein dispersion was pumped through plate-plate APV-mix heat exchanger at a flow rate of 500 1/h. Pre-heating at 60°C was followed by heat treatment of 85°C for 15 minutes. Formation of whey protein micelles was checked by measurement of particle size using dynamic light scattering as well a turbidity measurement at 500 nm. The obtained 4% whey protein micelles dispersion was characterised by a hydrodynamic radius of particles of 250 nm, a polydispersity index of 0.13 and a turbidity of 80. The whey protein micelle dispersion was then used to feed a Scheffers evaporator at a flow rate of 500 1/h. The temperature and vacuum in the evaporator were adapted so that around 500 kg whey protein micelles concentrate having a protein concentration 20% were produced and cooled down to 4°C.

**Comparative-Example 10: Enrichment by microfiltration**

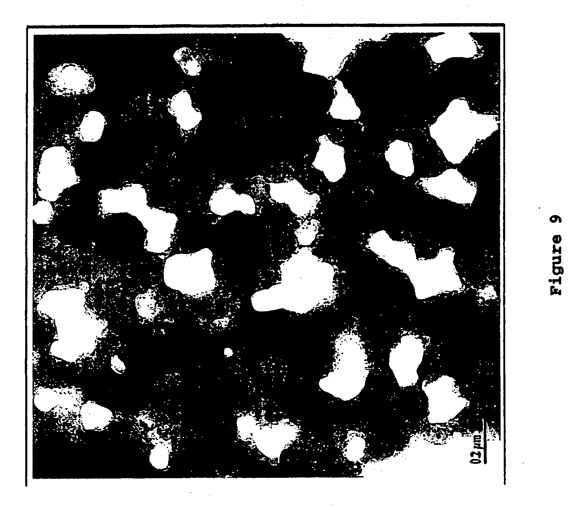

A whey protein isolate Prolacta 90 from Lactalis (lo 500648) has been reconstituted at 15°C in soft water at a protein concentration of 4% to reach a final batch size of 2500 kg. The pH was adjusted by addition of 1M hydrochloric acid so that the final pH value was 5.90. The whey protein dispersion was pumped through plate-plate APV-mix heat exchanger at a flow rate of 500 1/h. A pre-heating at 60°C was followed by heat treatment of 85°C for 15 minutes. Formation of whey protein micelles was checked by measurement of particle size using dynamic light scattering as well a turbidity measurement at 500 nm. The obtained 4% whey protein micelles dispersion was characterised by a hydrodynamic radius of particles of 260 nm, a polydispersity index of 0.07 and a turbidity of 80. The micelle form of the protein was also checked by TEM, and micelle structures with an average diameter of 150-200 nm were clearly visible (Fig. 9). The whey protein micelle dispersion was cooled at 4°C and used to feed a filtration unit equipped with a 6.8 $m^2$ Carbosep M14 membrane at a flow rate of 180 1/h. In that case, the concentration of the whey protein micelles was performed at 10°C until the permeate flow rate reached 70 1/h. In that case, the final whey protein concentrate contained 20% of proteins. The structure of the micelles in the concentrate was checked by TEM, and clearly no significant change was visible compared to the 4% whey protein dispersion before microfiltration (Fig. 10).

**Comparative-Example 11: Whey protein micelles powder comprising at least 90% whey protein.**

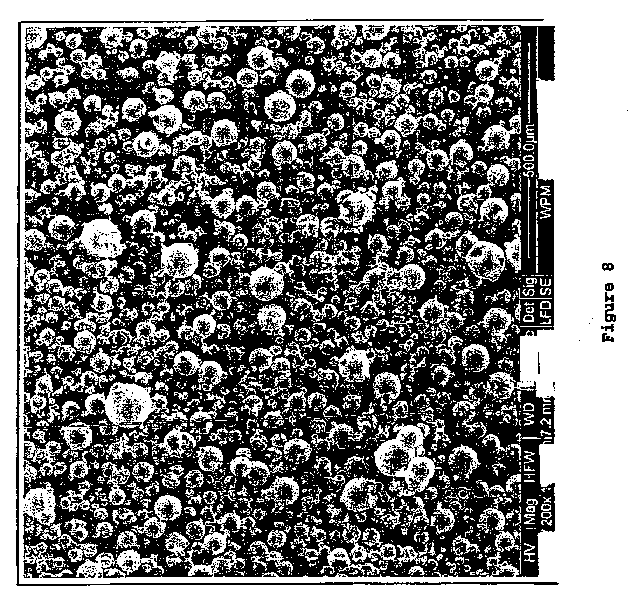

200 kg of a whey protein micelle concentrate obtained by microfiltration at 20% protein (see example above) were injected in a Niro SD6.3N tower using an atomisation nozzle (0 = 0.5 mm, spraying angle = 65°, pressure = 40 bars) at a product flow rate of 25 kg/h. The inlet temperature of product was 150°C and the outlet temperature was 75°C. The airflow in the tower was 150 $m^3$/h. The moisture content in the powder was less than 4% and the powder was characterized by a very high flowability. Scanning electron microscopy of the powder exhibited very spherical particles having an apparent diameter ranging from 10 to 100 $\mu$m (Fig. 8).

**Comparative-Example 12: Mixed whey protein micelle powder**

20 kg of a whey protein micelle concentrate were mixed with 1.7 kg of maltodextrins with a DE of 39 so that the final whey protein micelle to maltodextrin ratio in powder is 70/30. This mixture was injected in a Niro SD6.3N tower using an atomisation nozzle (Ø = 0.5 mm, spraying angle = 65°, pressure = 40 bars) at a product flow rate of 25 kg/h. The inlet temperature of product was 150°C and the outlet temperature was 75°C. The airflow in the tower was 150 $m^3$/h. The moisture content in the powder was less than 4% and the powder was characterized by very high flow ability.
The powders of examples 13 and 14, when reconstituted in water, comprise essentially micelles having the same structure and morphology as the whey protein micelle concentrate.

**Example 13: In-situ formation of whey protein micelles**

<u>Material</u>

| Ingredients | Percentages for dry product | Percentages for liquid product |
|---|---|---|
| Instant native whey protein isolate (WPI) | 30-40% | 3-4% |
| Monohydrate sodium dihydrogen phosphate | 5-15% | 0.5-1.5% |
| Coffee powder | 10-20% | 1-2% |
| Sucrose | 35-45% | 3-5% |
| Water | - | 85-95% |

<u>Method for a 3 in 1 (coffee, sweetener, whitener) coffee dry product</u>

Soluble coffee is dry-mixed with instant WPI powder, sucrose and monohydrate sodium dihydrogen phosphate. This blend is then stored in sealed aluminium packs to ensure constant moisture content. 10 g of this dry mix can be dispersed in 90 g of water in a cup and heated in a microwave for 100 s obtain a whey protein enriched milky coffee.

<u>Method for a liquid product</u>

Soluble coffee is dispersed in water together with instant WPI powder, sucrose and monohydrate sodium dihydrogen phosphate. This liquid blend is then microfiltered and stored at 4°C in polypropylene bottles. 100 mL of this ready to use 3 in 1 coffee blend are poured in a cup and heated in a microwave for 100 s obtain a whey protein enriched milky coffee.

**Claims**

1. A method for preparing a hot beverage or liquid comestible,
   the method comprising the following steps:

   - providing a beverage or liquid comestible package comprising native whey protein and at least one ingredient selected from coffee, soup ingredients, sauce ingredients, cocoa ingredients, tea ingredients, sweet dessert ingredients, maltodextrins, polysaccharides, cereals, soluble fibres or any combination thereof,
   wherein the content of the package is in the form of a powder to which water is added prior to the heating step or wherein the content of the package is in the form of a liquid,
   - heating the content of the package in order to prepare a heated ready-to-eat beverage or liquid comestible and at the same time transforming the native whey protein at least partially into whey protein micelles, wherein the yield of conversion of native whey protein into micelles is at least 20%,
   wherein the pH of the solution prior to heating is between 5 and 9, and wherein the heating is carried out during between 0.3 and 3s per ml of product.

2. Method according to any of claim 1, wherein the pH of the solution prior to heating is between 5 and 8.

3. Method according to any of claims 1 or 2, wherein the native whey protein content in the solution prior to heating is less than 12%.

4. Method of claim 3, wherein the native whey protein content in the solution prior to heating is less than 4%.

5. The method according to any of the preceding claims, wherein the heating is carried out during between 0.8 and 1.2s per ml of product.

6. The method according to any of the preceding claims, wherein the heating is carried out using a microwave radiation source.

7. The method according to any of the preceding claims, wherein the solution is heated to a temperature between 80°C and 100°C.

8. The method according to any of the preceding claims, wherein the package comprises coffee ingredients and the whey protein micelles act as a whitening agent.

**9.** The method according to claim 8, wherein the coffee ingredients are in a dry, soluble state.

**10.** The method according to any of the preceding claims, wherein during the heating step the native whey protein is denatured and converted into micelles.

**11.** Method of claim 10, wherein the yield of conversion is at least 50%.

**12.** Method of any of claim 10 or 11, wherein the yield of conversion is at least 80%.

**13.** The method according to any of the preceding claims, wherein the micelles have an average diameter of 100nm to 900nm.

**14.** Method according to any of the preceding claims, wherein the micelles formed act as a whitener.

**15.** Method according to any of the preceding claims, wherein the ready-to-eat beverage or liquid comestible is cooled prior to consumption.

**16.** Method according to any of the preceding claims, wherein the ready-to-eat beverage or liquid comestible is used as an ingredient in the manufacture of other consumable products.


**Patentansprüche**

**1.** Verfahren zur Herstellung eines heißen Getränks oder flüssigen Lebensmittels, wobei das Verfahren die folgenden Schritte aufweist:

- Bereitstellen einer Getränke- oder flüssigen Lebensmittelpackung mit nativem Molkenprotein und mindestens einer Zutat, die aus Kaffee, Suppenzutaten, Soßenzutaten, Kakaozutaten, Teezutaten, Süßspeisenzutaten, Maltodextrinen, Polysacchariden, Getreide, löslichen Ballaststoffen oder Kombinationen daraus ausgewählt ist, wobei der Inhalt der Packung die Form eines Pulvers hat, dem vor dem Schritt des Erwärmens Wasser zugefügt wird, oder wobei der Inhalt der Packung die Form einer Flüssigkeit hat,
- Erwärmen des Inhalts der Packung, um ein erwärmtes, trinkfertiges Getränk oder flüssiges Lebensmittel zuzubereiten, und gleichzeitig mindestens teilweises Umwandeln des nativen Molkenproteins in Molkenproteinmizellen, wobei die Ausbeute der Umwandlung von nativem Molkenprotein in Mizellen mindestens 20% beträgt,
wobei der pH-Wert der Lösung vor dem Erwärmen zwischen 5 und 9 liegt, und wobei das Erwärmen während 0,3 und 3s je ml des Produktes durchgeführt wird.

**2.** Verfahren nach Anspruch 1, wobei der pH-Wert der Lösung vor dem Erwärmen zwischen 5 und 8 liegt.

**3.** Verfahren nach einem der Ansprüche 1 oder 2, wobei der Gehalt an nativem Molkenprotein in der Lösung vor dem Erwärmen weniger als 12% beträgt.

**4.** Verfahren nach Anspruch 3, wobei der Gehalt an nativem Molkenprotein in der Lösung vor dem Erwärmen weniger als 4% beträgt.

**5.** Verfahren nach einem der vorhergehenden Ansprüche, wobei das Erwärmen während 0,8 und 1,2s pro ml des Produkts durchgeführt wird.

**6.** Verfahren nach einem der vorhergehenden Ansprüche, wobei das Erwärmen unter Verwendung einer Mikrowellenstrahlungsquelle durchgeführt wird.

**7.** Verfahren nach einem der vorhergehenden Ansprüche, wobei die Lösung auf eine Temperatur zwischen 80°C und 100°C erwärmt wird.

**8.** Verfahren nach einem der vorhergehenden Ansprüche, wobei die Packung Kaffeezutaten aufweist und die Molkenproteinmizellen als Kaffeeweißer fungieren.

**9.** Verfahren nach Anspruch 8, wobei die Kaffeezutaten in einem trockenen, löslichen Zustand vorhanden sind.

**10.** Verfahren nach einem der vorhergehenden Ansprüche, wobei das native Molkenprotein während des Erwärmungsschrittes denaturiert und in Mizellen umgewandelt wird.

**11.** Verfahren nach Anspruch 10, wobei die Ausbeute der Umwandlung mindestens 50% beträgt.

**12.** Verfahren nach einem der Ansprüche 10 oder 11, wobei die Ausbeute der Umwandlung mindestens 80% beträgt.

**13.** Verfahren nach einem der vorhergehenden Ansprüche, wobei die Mizellen einen durchschnittlichen Durchmesser von 100nm bis 900nm haben.

**14.** Verfahren nach einem der vorhergehenden Ansprüche, wobei die gebildeten Mizellen als Aufheller fungieren.

**15.** Verfahren nach einem der vorhergehenden Ansprüche, wobei das trinkfertige Getränk oder das flüssige Lebensmittel vor dem Verzehr gekühlt wird.

**16.** Verfahren nach einem der vorhergehenden Ansprüche, wobei das trinkfertige Getränk oder das flüssige Lebensmittel als Zutat bei der Herstellung anderer verzehrfähiger Produkte verwendet wird.

**Revendications**

**1.** Procédé pour la préparation d'une boisson chaude ou d'un produit alimentaire liquide chaud, le procédé comprenant les étapes suivantes :

- fournir un paquet de boisson ou de produit alimentaire liquide comprenant une protéine de lactosérum native et au moins un ingrédient choisi parmi café, ingrédients de soupe, ingrédients de sauce, ingrédients de cacao, ingrédients de thé, ingrédients de dessert sucré, maltodextrines, polysaccharides, céréales, fibres solubles ou toute combinaison de ceux-ci,
dans lequel le contenu du paquet est sous la forme d'une poudre à laquelle de l'eau est ajoutée avant l'étape de chauffage ou dans lequel le contenu du paquet est sous la forme d'un liquide,
- chauffer le contenu du paquet de manière à préparer une boisson prête à consommer et chaude ou un produit alimentaire liquide prêt à consommer et chaud et en même temps transformer la protéine de lactosérum native au moins partiellement en des micelles de protéine de lactosérum, dans lequel le rendement de conversion de protéine de lactosérum native en micelles est d'au moins 20 %,
dans lequel le pH de la solution avant le chauffage est compris entre 5 et 9, et dans lequel le chauffage est effectué pendant une durée comprise entre 0,3 et 3 s par ml de produit.

**2.** Procédé selon la revendication 1, dans lequel le pH de la solution avant le chauffage est compris entre 5 et 8.

**3.** Procédé selon l'une quelconque des revendications 1 ou 2, dans lequel la teneur en protéine de lactosérum native dans la solution avant le chauffage est inférieure à 12 %.

**4.** Procédé selon la revendication 3, dans lequel la teneur en protéine de lactosérum native dans la solution avant le chauffage est inférieure à 4 %.

**5.** Procédé selon l'une quelconque des revendications précédentes, dans lequel le chauffage est effectué pendant une durée comprise entre 0,8 et 1,2 s par ml de produit.

**6.** Procédé selon l'une quelconque des revendications précédentes, dans lequel le chauffage est effectué en utilisant une source de radiation micro-onde.

**7.** Procédé selon l'une quelconque des revendications précédentes, dans lequel la solution est chauffée à une température comprise entre 80 °C et 100 °C.

**8.** Procédé selon l'une quelconque des revendications précédentes, dans lequel le paquet comprend des ingrédients de café et les micelles de protéine de lactosérum tiennent lieu d'agent blanchissant.

9. Procédé selon la revendication 8, dans lequel les ingrédients de café sont dans un état soluble sec.

10. Procédé selon l'une quelconque des revendications précédentes, dans lequel pendant l'étape de chauffage la protéine de lactosérum native est dénaturée et convertie en micelles.

11. Procédé selon la revendication 10, dans lequel le rendement de conversion est d'au moins 50 %.

12. Procédé selon la revendication 10 ou 11, dans lequel le rendement de conversion est d'au moins 80 %.

13. Procédé selon l'une quelconque des revendications précédentes, dans lequel les micelles ont un diamètre moyen de 100 nm à 900 nm.

14. Procédé selon l'une quelconque des revendications précédentes, dans lequel les micelles formées tiennent lieu d'agent blanchissant.

15. Procédé selon l'une quelconque des revendications précédentes, dans lequel la boisson prête à consommer ou le produit alimentaire liquide prêt à consommer est refroidi avant consommation.

16. Procédé selon l'une quelconque des revendications précédentes, dans lequel la boisson prête à consommer ou le produit alimentaire liquide prêt à consommer est utilisé comme ingrédient dans la fabrication d'autres produits consommables.

Soluble aggregates

Micelles

Curd

pH 5.0 - 5.2 - 5.4 - 5.6 - 5.8 - 6.0 - 6.2 - 6.4 - 6.6 - 6.8 - 7.0

Figure 1

EP 1 839 504 B2

**Figure 2**

Figure 3

**mM Arginine HCl**

Figure 4

Figure 5

Figure 6

23

Protein micelle

Hydrophilic head of protein molecule

Hydrophobic tail of protein molecule

Figure 7

Figure 8

Figure 9

Figure 10

Figure 11

Figure 12

Figure 13

Size distribution of a WPM dispersion at 4 wt% protein concentration after heat treatment at 85°C for 15 min at pH 5.9

Figure 14

EP 1 839 504 B2

Figure 15

Figure 16

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6767575 B1
- GB 1079604 A
- WO 9307761 A
- US 5750183 A
- WO 9117665 A
- EP 1281322 A
- EP 0603981 A
- US 4309417 A
- US 6036984 A
- US 4110476 A
- US 20020039617 A
- WO 2006034857 A2

**Non-patent literature cited in the description**

- **ELOFSSON et al.** *International Dairy Journal,* 1997, 601-608
- **KILARA et al.** *Journal of Agriculture and Food 20 Chemistry,* 1998, 1830-1835
- *Journal of American College of Nutrition,* 1990, 398-409
- *Eur. J. Clin. Invest.,* 2001, vol. 31, 171-178